# EUROPEAN PATENT APPLICATION

(11) **EP 1 177 855 A2**
(43) Date of publication of application: **06.02.2002**
(21) Application number: 01306591.7
(22) Date of filing: 01.08.2001
(51) Int. Cl.: B23Q 16/06, G02B 7/00

(54) **Indexing mechanism**

(30) Priority: 05.08.2000 GB 0019199
(71) Applicant: Renishaw plc, Wotton-Under-Edge Gloucestershire GL12 8JR (GB)
(72) Inventor: Woolfrey, Andrew Mark, Gloucestershire GL12 7AP (GB); Smith, Brian John Edward, Yate, South Gloucestershire BS37 7LF (GB); McMurtry, David Roberts, Dursley, Gloucestershire GL11 6AT (GB); Hill, Michael Jackson, Gloucestershire GL12 7DE (GB)
(74) Representative: Jackson, John Timothy

(57) **Abstract**

An indexing mechanism comprises a disc (2) rotatable about a central axis, suitable for holding objects such as lenses. Detents (8) are provided on the disc which interact with a pawl (14) on a fixed surface adjacent the disc (2). When the disc rotates in a first direction the pawl (14) is deflected by each passing detent (8), returning to its rest position when the detent (8) is passed. When the disc is rotated in an opposite direction, the pawl (14) abuts a detent (8) to define an index position. The disc is driven or biased in this direction to retain this position. A stop (10) may be provided on the disc (2) adjacent each detent (8) which defines the position of the pawl (14) relative to the disc (2). The disc (2) may be driven by a motor (12) and drive means. An alternative system may be used in which lever (40) interacts with a plurality of protrusions (46) on the disc to rotate the disc in a first direction or bias the disc in a second direction so that the pawl (14) abuts a detent (8).

## Description

The present invention relates to an indexing mechanism for providing discrete predetermined positions of rest for an object or objects.

The mechanism of the invention relates particularly but not exclusively to the field of optical measurement, or spectroscopic analysis.

Indexing mechanisms of various forms are known. One common approach for rotating indexing is to use a rotary encoder and stop rotation when a certain angular position is reached.

In one commercially available indexing table (used to support optical elements) such a mechanism is supplemented by an arrangement including a sprung ball biased into a recess to positively hold the table in one indexed position. Although this recess may be ramped, the force of the bias on the ball is difficult to overcome when resumption of rotation is carried out, and a high torque is required to push the ball out of the recess to resume turning. Additionally the bias force on the ball has a bending moment on the table support bearings which can cause positional errors.

Another shortcoming of this prior art concerns inaccuracy. It is the relative position of two movable parts which is significant. Inevitably there will be some play between the ball and the support for the ball. Therefore the indexing position can never be precisely determined because the support can move slightly relative to the recess.

Preferred embodiments of the invention address at least the above problems.

According to a first aspect of the invention, there is provided an indexing mechanism comprising a member movable in a first direction relative to a fixed structure and in a second direction opposite to said first direction;
at least one first element on the member, said first element comprising a detent or pawl;
a second element located on the fixed structure, said second element comprising the other of a detent or pawl;
wherein when the member is moved in a first direction, the pawl is displaced from a rest position by the or each passing detent, returning to its rest position when the or each detent has passed;
and wherein when the member is moved in the second direction the pawl abuts a detent to define an index position and the member is biased or driven in the second direction to retain this position.

Preferably the member is a disc rotatable about a central axis.

Preferably the member is moved with respect to the fixed structure by a motor and drive means.

Alternatively the driving means may comprise a lever pivoted on a fixed surface, wherein the lever interacts with a plurality of elements disposed about the axis of the disc; wherein if the lever is moved in a first direction, a first surface of the lever contacts a first surface of an element and pushes the disc in the first direction and wherein if the lever moves in a second direction, a second surface of the lever contacts a second surface of an element and pushes the disc in the second direction.

Movement of the lever may be controlled by a wire attached to the lever at one end and to a fixed point at the other end, wherein the length of the wire is altered by applying heat to the wire.

Preferably a stop is provided on the member adjacent each detent wherein the stop defines the position of the pawl relative to the member.

Preferably point contact is made between the first element and second element. Point contact may be made between the second element and the stop.

Preferably the first element and/or second element are profiled to prevent sliding contact therebetween at locations where point contact takes place.

According to a second aspect of the invention there is provided a rotary table for supporting optical elements, the table being indexable by means of ratchet mechanism.

The invention will now be described with reference to the drawings in which:
Fig 1 shows a perspective view of a first embodiment of the invention;
Fig 2 shows a side view of the first embodiment shown in Fig 1;
Fig 3 shows an enlarged perspective view of a portion III shown in Fig 1;
Figs 4 and 5 are plan views of a second embodiment of the invention;
Fig 6 is an exploded view of the second embodiment;
Fig 7 is a plan view of the wheel seen in Figs 4-6; and
Fig 8 is a perspective view of the wheel shown in Fig 7.

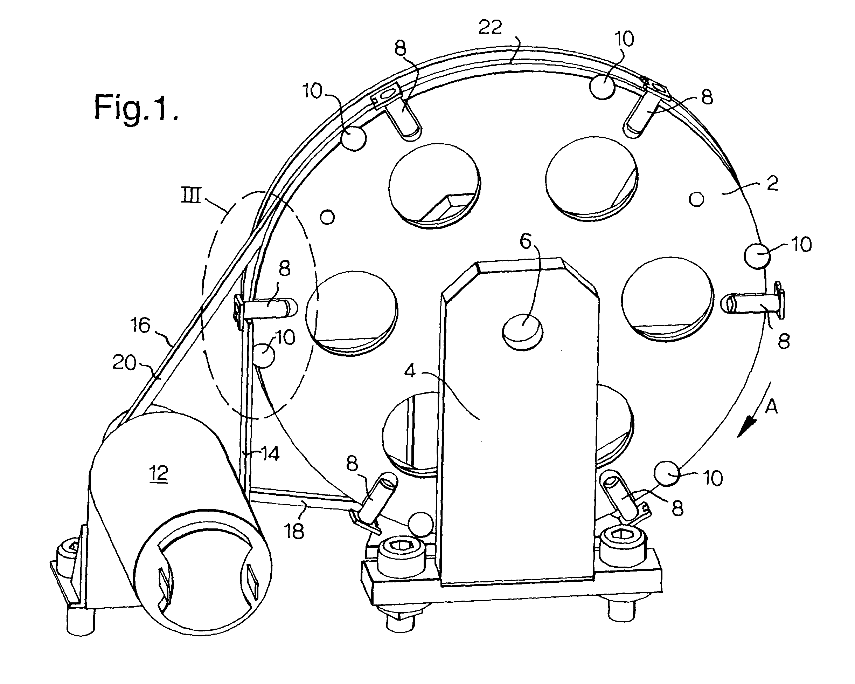

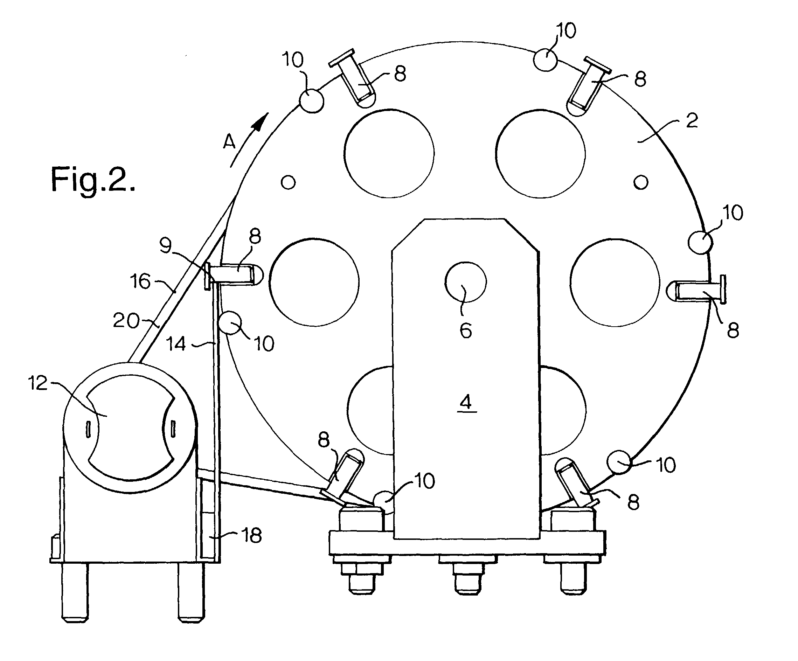

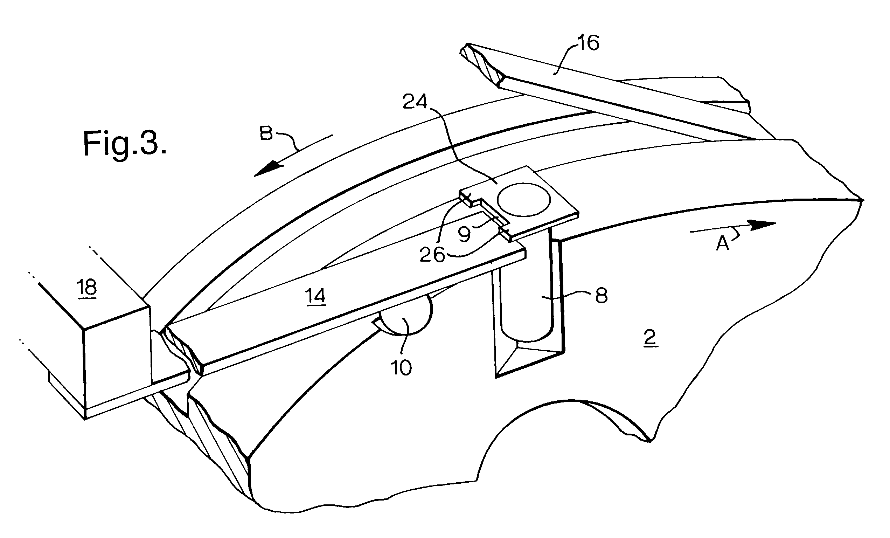

Referring to the Figs 1-3 collectively, a first embodiment of the invention is shown which comprises an indexable table 2 which in use will be used to support objects, e.g. optical apparatus. The table, which can be used in any orientation, is indexable to one of a number (in this case 6) positions, so that objects can be brought into use at one of the positions, and reintroduced subsequently in that exact same position. Exact rotational movement of the table is obtained by a precision bearing 6 and angular positioning is obtained using a mechanism shown in Fig 3 and discussed below. The bearing 6 may be of the type described in our copending UK patent application GB 0019200.5 filed on 5th August 2000.

Bearing 6 is mounted to table support 4 which is in turn fixed to spectroscopic analysis apparatus or the like. The table is driven to rotate principally unidirectionally in the direction of arrow A by motor 12. The motor 12 is also fixed to the apparatus. A drive belt 16 operatively connects the motor 12 to the table 2.

The table 2 has detents 8 at its periphery which in use co-operate with a fixed resilient pawl element 14. The detents may be mounted to the table in slots and may be secured in the slots with adhesive. The detents shown are in the form of a cylinder in this case a hardened steel roller.

In the manner of a ratchet the pawl 14 is displaced to ride over a detent 8 as the table is driven and then into register with a detent 8 at detent/pawl contact point 9. Once the pawl has ridden over the detent and sprung back into its nominal position the pawl to detent contact is obtained by reversing the direction of rotation of the table 2. This reversal may be effected by a change in motor driving direction. If the motor is reversed and the table is driven in the direction of arrow B a tension will be generated in the belt side 20, which will hold the pawl in contact with the detent when the motor is stopped. A slipping clutch may be used in the motor drive to prevent excessive loading on the pawl when reversing the motor drive after pawl/detent contact has been made. A light loading of the pawl/detent may be maintained either by residual tension in the belt and/or by reverse powering the motor, with or without a clutch.

In use the table can be indexed to any one of six positions associated with detents 8. Motor 12 will be linked to a controller (not shown) which will include a table position monitoring device, for example a rotary encoder. Thus the position of the table is known to the controller and repositioning to a suitable index position can be effected by rotation in direction A followed by a short rotation in direction B.

It will be noted that sliding movement of the end of the pawl in the region that contacts the detent 8 will cause wear in that region. To avoid such wear, a wear relief shoulder 24 is provided mounted on the outer end of detent 8. The shoulder has lips 26 which permit sliding contact only with the outer portions of the end of the pawl 14 and prevent rubbing at the contact region 9. In this way the contact portion of the pawl is not worn by sliding contact. The pawl 14 is positioned relative to the table by its mounting 18 and a stop 10 adjacent each detent 8. The pawl is biased by its resilience towards the stop so that it rests against the stop 10 when at an indexed position. The stop allows repeatable positioning of the table because the pawl will be in exactly the same place each time the table returns to one of its indexing positions. The ball may be fixed in a slot in the table and possibly secured with adhesive. The stops 10 shown are in the form of a sphere, in this case a hardened steel ball. Pawl 14 makes substantially point contact with each detent 8 and makes point contact with each stop 10, thus providing accurate and repeatable index positions.

Whilst the invention has been described with reference to the embodiment shown in the Figures, other embodiments are possible within the ambit of the invention. For example linear relative motion is possible, between the pawl and associated detents. In such an arrangement the pawl could be lifted for example by an electromagnet, when it travelled in a direction against the ratchet action.

Also possible is the exchange of the pawl for a detent and the exchange of the plurality of detents for a plurality of pawls, so a plurality of pawls would index with a single detent with rotary or linear relative movement. Possible also is the provision of just one detent and one pawl.

It is possible also to provide the lips 26 on the end of the pawl 14 instead of on the shoulder 24, as long as they do not foul the detent 8 preventing contact between the detent 8 and the contact region 9. It is possible to provide just a single lip 26 (on the shoulder 24 or on the pawl 14 instead of the two lips shown).

An indexing mechanism according to the embodiments described above has the advantages of: low wear on position defining surfaces which gives high repeatability over many cycles of use; low torque drive requirements in comparison to prior art devices; a simple drive coupling; and low cost components providing an overall low manufacturing cost.

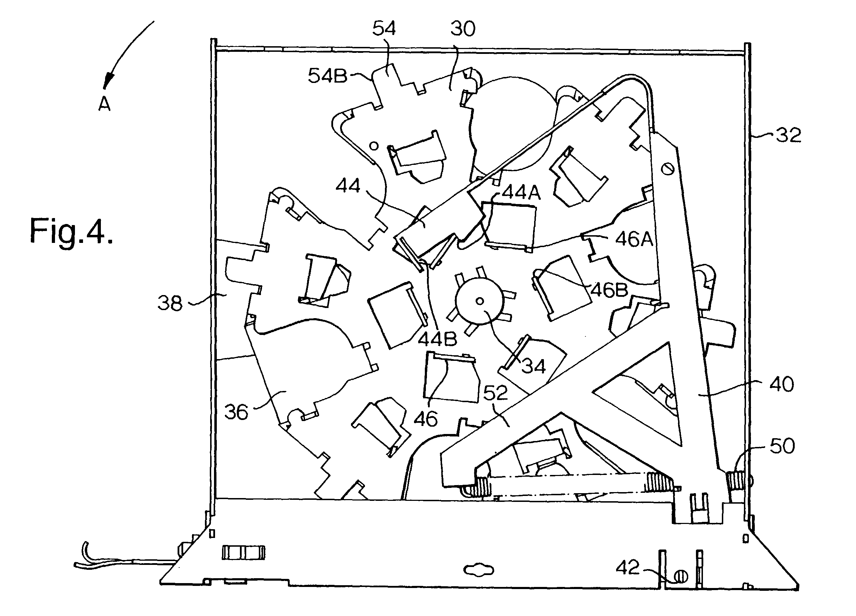

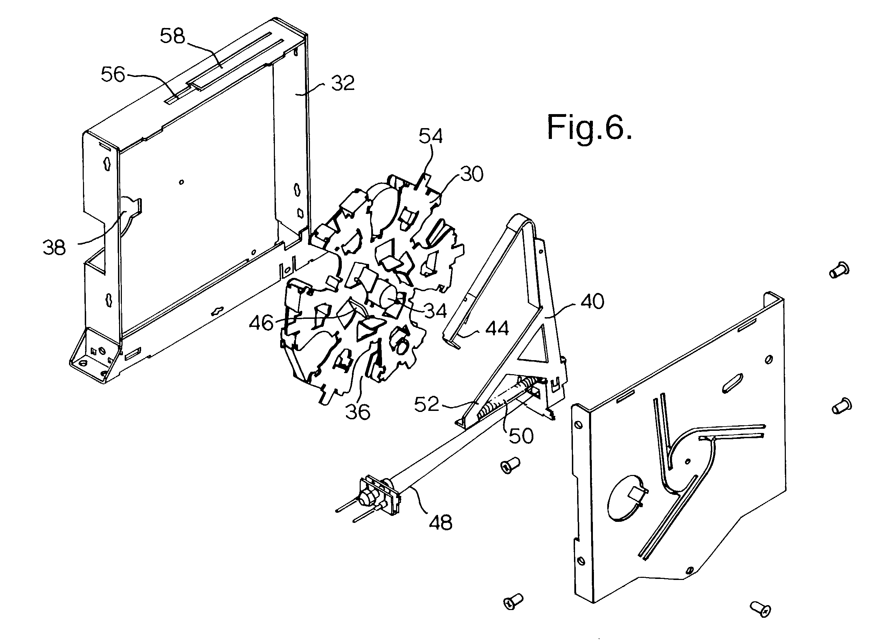

A second embodiment of the invention will now be described with reference to Figs 4-7.

An indexable wheel 30 is mounted in a housing 32 via a central bearing 34 (i.e. a high precision bearing). The wheel 30 has a plurality of apertures 36 evenly spaced on a circle about the central axis of the wheel to accommodate objects such as lenses. The housing 32 is provided with a window 38 such that the wheel 30 may be rotated to align each object in its aperture 36 with the window 38 in the housing 32.

A lever 40 is provided which has the dual purpose of driving the wheel 30 to rotate about its axis such that successive apertures 36 are aligned with the window 38 on the housing 32 and also holding the wheel in a desired position.

The lever 40 is pivoted at a pivot point 42 on the housing 32. At the distil end from the pivot point 42 the lever is provided with a shaped portion 44.

The wheel 30 is provided with a number of protrusions 46 corresponding to the number of apertures 36. The protrusions 46 are also evenly spaced on a circle about the central axis of the wheel. Each protrusion has two edges 46A and 46B.

The shaped portion 44 of the lever 40 has two surfaces 44A and 44B which are positioned to be contactable with the corresponding edges 46A,46B of each protrusion 46. The shaped portion 44 may be angled from the main body of the lever 40 to bring it to the correct position in relation to the wheel 30.

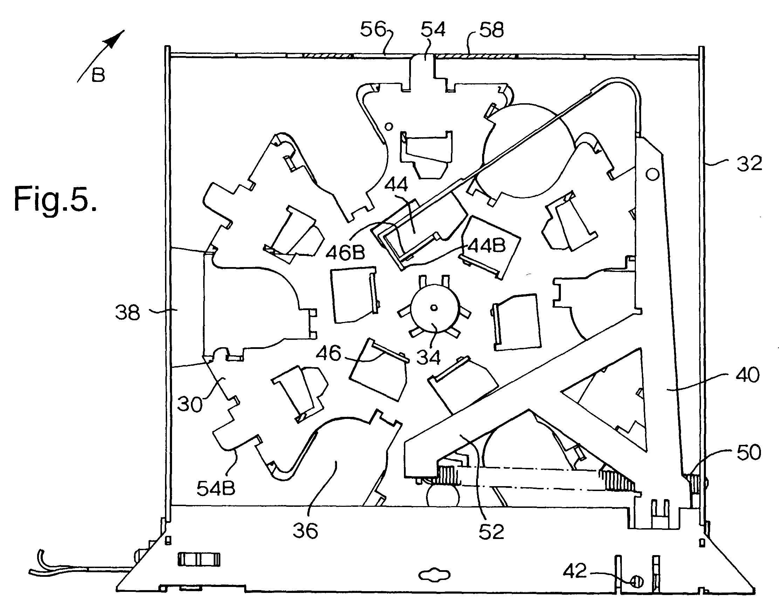

A coiled spring 50 is provided which is attached at one end to the housing 32 and at another end to an arm 52 protruding from the lever 40. This coiled spring biases the lever in the direction of arrow B, shown in Fig 5. The lever may be biased in the direction of arrow B by other means, for example by using a weight under gravity.

The lever is actuated by a memory wire 48 which is attached towards an end of the lever 40 remote from the shaped portion 44 at one end and fixed to the housing 32 at its other end. A current may be passed through the memory wire which reduces its length by approximately 3% by heating the wire above a transition temperature. When no current is passed through the wire and it cools below a transition temperature it returns to its unextended length.

When current is passed through the memory wire it is heated and contracts. The contracted wire pulls the lever in the direction of arrow A shown in Fig 4 against the bias of coiled spring 50. Surface 44A of the shaped portion 44 thus comes into contact with surface 46A of a protrusion 46. As the shaped portion 44 of the lever 40 pushes the protrusion 46 the wheel 30 will rotate in the direction shown by arrow A.

When no current is passed through the memory wire 48 and it cools below a transition temperature, it extends in length. The lever 40 is now pulled in direction B by spring 50. Now surface 44B of the shaped portion 44 of the lever 40 comes into contact with surface 46B of the next protrusion 46, pulling the wheel 30 in direction B, as shown in Fig 5.

The lever may be actuated by other means, for example a solenoid or motor.

The wheel 30 is provided with a set of stops 54 which extend from the circumference of the wheel 30, again evenly spaced on a circle about its central axis. The upper surface of the housing 32 has an aperture 56 and adjacent this aperture a u-shaped cut-out defines a spring 58.

The stops 54 are positioned relative to protrusions 46 such that when surface 44B of the shaped portion 44 abuts edge 44B on a protrusion 46, the corresponding stop 54 abuts the spring 58. The position of the wheel is precisely defined by the combination of the lever 40 pulling the protrusion 46 in direction B and the stop 54 abutting spring 58. This precise position is held when no current passes through the memory wire 48 and it is cooled below its transition temperature.

Stops 54 each have a rounded surface 54B on one side. This enables the wheel 30 to rotate in direction A without being impeded by the spring 58. In this direction the rounded surface 54B of the stop 54 is able to deflect the spring 58 as it passes, the spring 58 returning to its rest position once the stop 54 has passed.

Thus when no current is passed through the memory wire, an aperture is held precisely aligned with the window, whereas by passing current through the wire, the wheel is rotated until the next aperture becomes aligned with the wire.

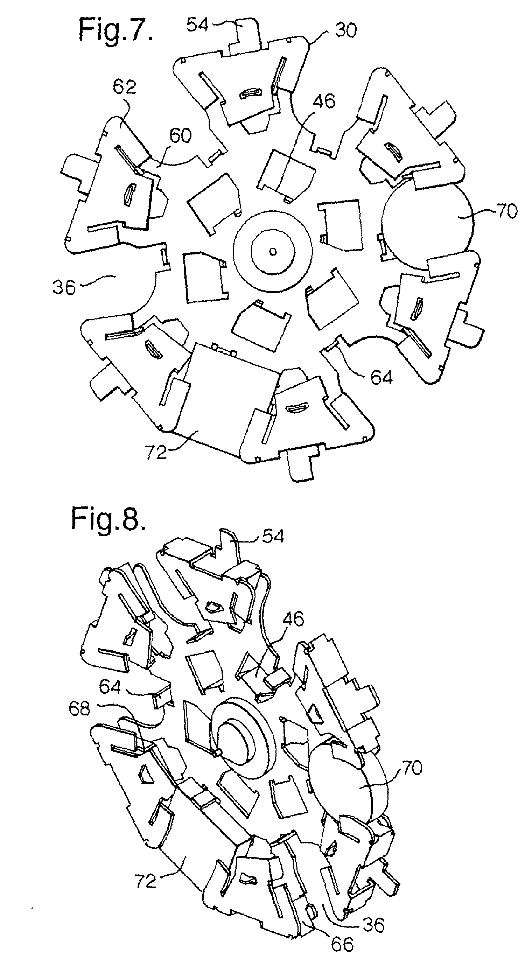

Figs 7 and 8 show the wheel used in the invention. This wheel may be made from a flat sheet of metal which is folded into the desired configuration. Apertures and cut-outs may first be formed by, for example, chemi-etching.

The apertures 36 are able to receive different shaped objects, for example a round object 70 or a square object 72 as shown in Figs 7 and 8. The object is inserted between surfaces 60,62 of the wheel 30.

Surface 62 is a sprung surface and holds the object against surface 60. A stop 64 defines one end of the aperture. Sprung sides 66,68 of the aperture are deflected by the object as it is inserted into the aperture. These sprung sides are biased towards the object and hold it in position in the aperture.

Thus both round and square objects may have their positions precisely defined within the aperture by these three points of contact.

## Claims

**1.** An indexing device comprising a member (2,30) movable in a first direction relative to a fixed structure (18,32) and in a second direction opposite to said first direction;
at least one first element (8,54) on the member, said first element comprising a detent or pawl;
a second element (14,58) located on the fixed structure, said second element comprising the other of a detent or pawl;
wherein when the member (2,30) is moved in a first direction, the pawl is displaced from a rest position by the or each passing detent, returning to its rest position when the or each detent has passed;
and wherein when the member (2,30) is moved in the second direction the pawl abuts a detent to define an index position;
**characterised in that** the member is biased or driven in the second direction to retain this position.

**2.** An indexing device according to claim 1 wherein the member (2,30) is a disc rotatable about a central axis.

**3.** An indexing device according to any preceding claim wherein the first element (8,54) comprises a detent and the second element (14,58) comprises a pawl.

**4.** An indexing device according to any preceding claim wherein the member (2,30) is moved with respect to the fixed structure by a motor (12) and drive means.

**5.** An indexing device according to claim 4 wherein the drive means comprises an elastomeric belt (16).

**4.** An indexing device according to claim 2 wherein the disc is rotated by a lever (40) pivoted on a fixed surface (32) which interacts with a plurality of elements (46) disposed about the axis of the disc, wherein if the lever (40) is moved in a first direction a first surface of the lever (44A) contacts a first surface of an element (46A) and pushes the disc in said first direction and wherein if the lever is moved in a second direction a second surface of the lever (44B) contacts a second surface of an element (46B) and pushes the disc in the second direction.

**7.** An indexing device according to claim 6 wherein movement of the lever (40) is controlled by a wire (48) attached to the lever at one end and to a fixed point at the other end, wherein the length of the wire (48) is altered by applying heat to the wire.

**8.** An indexing device according to claim 3 wherein a stop (10) is provided on the member adjacent each detent wherein the stop (10) defines the position of the pawl relative to the member (2,30).

**9.** An indexing device according to any preceding claim wherein the first element (8,54) and the second element (14,58) are configured such that there is point contact between them when they are abutting.

**10.** An indexing device according to any preceding claim wherein the first element (8,54) and the second element (14,58) are profiled to prevent sliding contact between them at the locations where contact occurs.

**11.** An indexing device according to any preceding claim wherein the member (2,30) is provided with at least one receiving means (36) for receiving objects (70,72).

**12.** An indexing device according to claim 11 wherein each receiving means (36) has three points of contact (64,66,68) with the object (70,72) to define the position of the object.

**13.** An indexing device according to any preceding claim wherein the member (2,30) is made from a plate cut and folded into the desired configuration.
